# EUROPEAN PATENT APPLICATION

(11) **EP 1 905 298 A1**
(43) Date of publication of application: **02.04.2008**
(21) Application number: 07253098.3
(22) Date of filing: 08.08.2007
(51) Int. Cl.: A01K 15/02

(54) **Ball thrower**

(30) Priority: 27.09.2006 GB 0619083; 23.10.2006 GB 0621080; 28.11.2006 GB 0623766; 11.12.2006 GB 0624726; 21.03.2007 GB 0705355
(71) Applicant: Cattlin, Brett, Rochester Kent ME1 2RZ (GB)
(72) Inventor: Cattlin, Brett, Rochester Kent ME1 2RZ (GB)
(74) Representative: Gambell, Derek

(57) **Abstract**

The ball throwing device (1) can be attached to a dog leash (2) or purposely made length of strap (3) using the purposely designed handle on the ball throwing device (4) or loop (15) or cord lock handle (12). With the ball throwing device (1) securely attached to a dog leash (2), the clasp end of the dog leash (5) can then be connected to a supplied retaining ring (6) located on the leash handle (7). The ball throwing device can be used for picking up a ball (8) hands free. This is achieved by placing the ball throwing device (1) over a ball (8) and pressing down firmly. The ball throwing device (1) fits neatly over the ball (8) and is able to hold the ball securely.

## Description

This invention relates to a ball throwing device that can be attached or incorporated into a dog lead or purpose made length of strap.

When walking a dog in a country park or field etc. it is good fun to throw a ball for your dog to retrieve and hopefully return to you! However, this can be a strenuous activity on the human arm which can also involve the dog walker having to pick up a muddy, messy ball covered in dog saliva and when the game is over, the dog owner has to put the same messy ball in their pocket or bag!

### Statement of Invention

According to the present invention there is provided a ball throwing device comprising a substantially semi-spherical ball housing cup and a strap/dog lead attachment means mounted on an outer surface of the ball housing cup such that, in use, with a strap/dog lead attached to the ball throwing device the device may be swung via the strap/dog lead enabling a ball placed in the ball housing cup to be projected. The ball throwing device can be attached or incorporated into any standard/textile/leather or retractable dog lead or purpose made length of strap. The ball throwing device can be vertically placed over a ball enabling a ball to be picked up. The ball throwing device/housing cup could have an adjustable hemisphere for the purpose of controlling the distances that a ball could be thrown. With the ball throwing device attached or incorporated into a dog lead or length of strap can then be swung in a forward/over arm throwing motion, allowing the ball to be projected. The user is therefore able to throw a ball further whilst exerting less effort by utilising leverage from the dog lead or straps length. The ball throwing device is designed so that it can be held on the dog leash whilst not in use, with or without the ball inserted. This feature enables the user to avoid having to place the dirty, messy ball in their pocket or bag.

The ball thrower device may be designed to hold a specific size ball such as a tennis ball. Its unique design and structure is therefore unable to throw anything other than a ball. This safety feature could prevent dangerous projectile objects such as sticks or stones etc. from being thrown.

### Advantages

The ball throwing device uses leverage from a lead or length of strap to throw a ball further than the human arm and with less effort;

The ball throwing device enables the user to cleanly pick up a ball without soiling their hands on a muddy ball;

The ball throwing device could have one or more adjustment mechanisms enabling the user to control the distance that a ball can be thrown.

The ball throwing device is designed so that it can be held on the dog leash whilst not in use, with or without the ball inserted. This feature enables the user to avoid having to place the dirty, messy ball in their pocket or bag.

The ball throwing device's mechanism or mechanisms can also be used to increase or decrease the overall size of the housing cup's inner casing hemisphere. This enables various sized balls to be used.

### Introduction to Drawings

An example of the invention is now described, along with accompanying drawings for reference:
Figure 1 shows a front view of the ball throwing device.
Figure 2 shows a dog leash.
Figure 3 shows a slightly elevated view of the ball throwing device, with the adjuster mechanism in the downward position.
Figure 4 shows a slightly elevated view of the ball throwing device, with the adjuster mechanism in the upward position.
Figure 5 shows a side/off centre view of the ball throwing device with the adjuster in the upward position.
Figure 6 shows a side view of the ball throwing device.

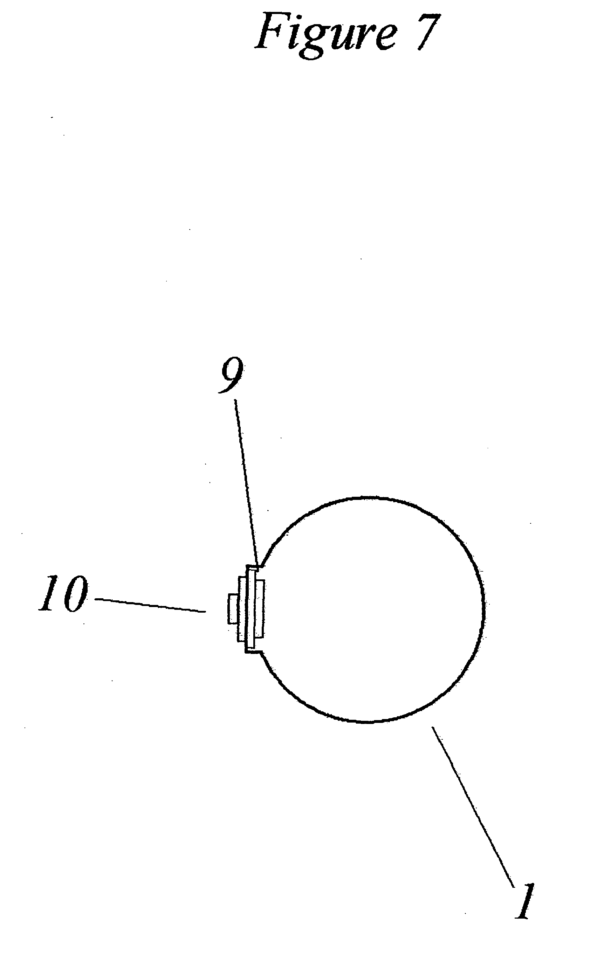

Figure 7 shows a plan view of the ball throwing device.

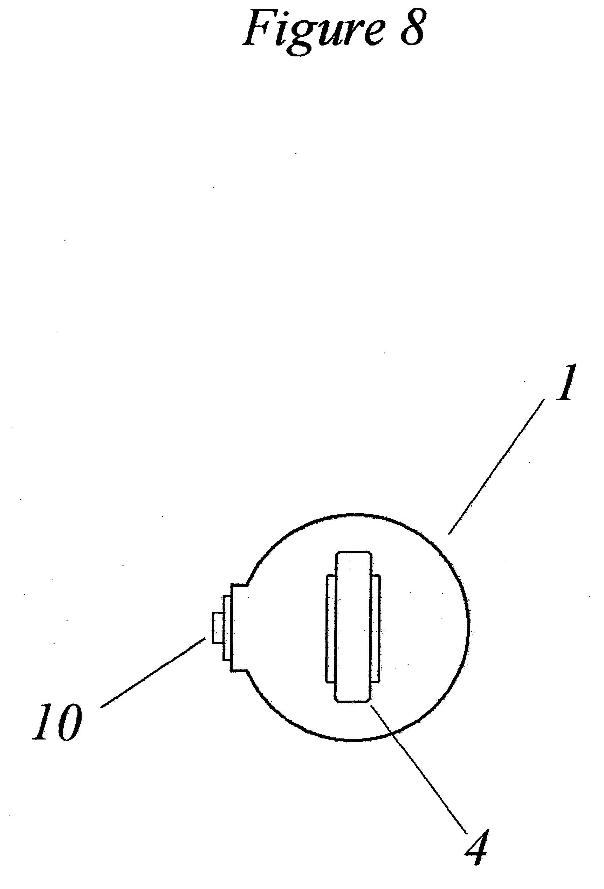

Figure 8 shows an underside view of the ball throwing device.
Figure 9 shows the ball throwing device with a ball inserted.
Figure 10 shows the ball throwing device attached to a strap.
Figure 11 shows how the ball throwing device can be attached to a dog leash.
Figure 12 shows a diagram of an over arm throwing action. The ball held within the throwing device on the lead or strap is swung from position (A) and then releases from the device position (B).

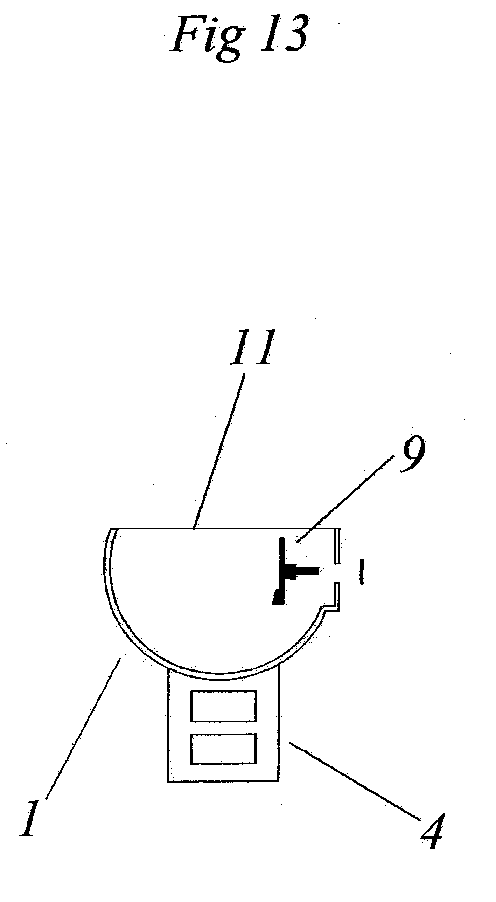

Figure 13 shows an exploded view of the adjuster mechanism.
Figure 14 shows the adjuster mechanism assembled and in its downward position.
Figure 15 shows how the adjuster mechanism which when rotated into the upward position, adjusts the overall diameter of the inner casing hemisphere.
Figure 16 shows how the ball throwing device with a ball inserted can be retained on a dog leash when not in use.

### Other Designs

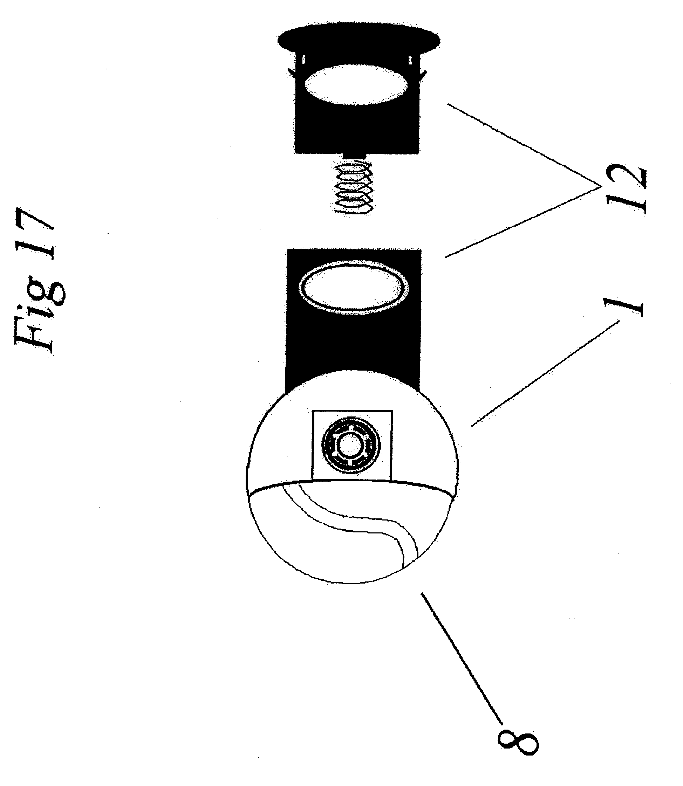

Figure 17 shows how the handle on the ball throwing device could be designed as a spring chord locking handle (exploded view).

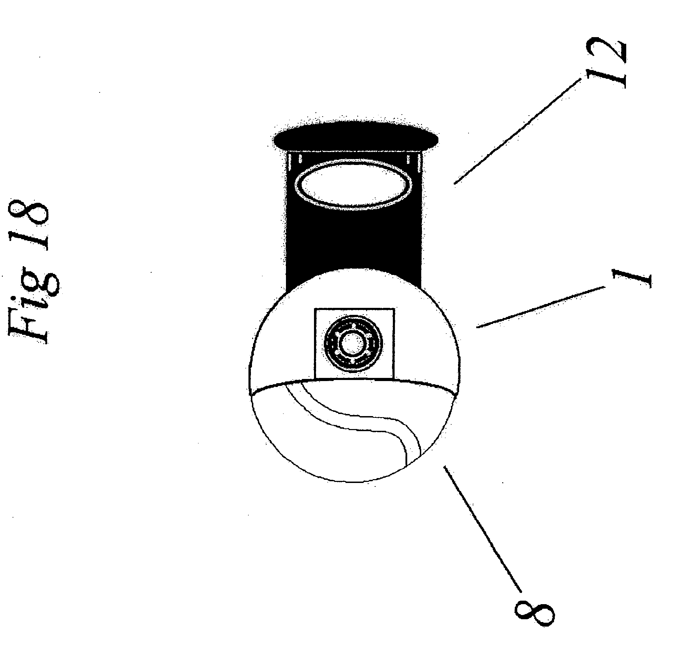

Figure 18 shows the spring chord lock handle assembled.

Figure 19 shows the spring chord lock handle design attached to a dog lead.

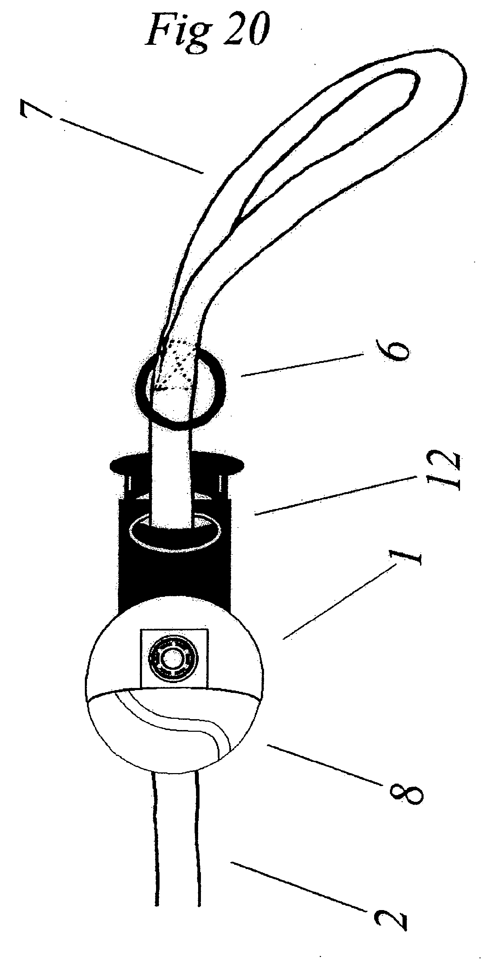

Figure 20 shows how the spring chord lock handle design can be held in position on the dog lead when not in use.

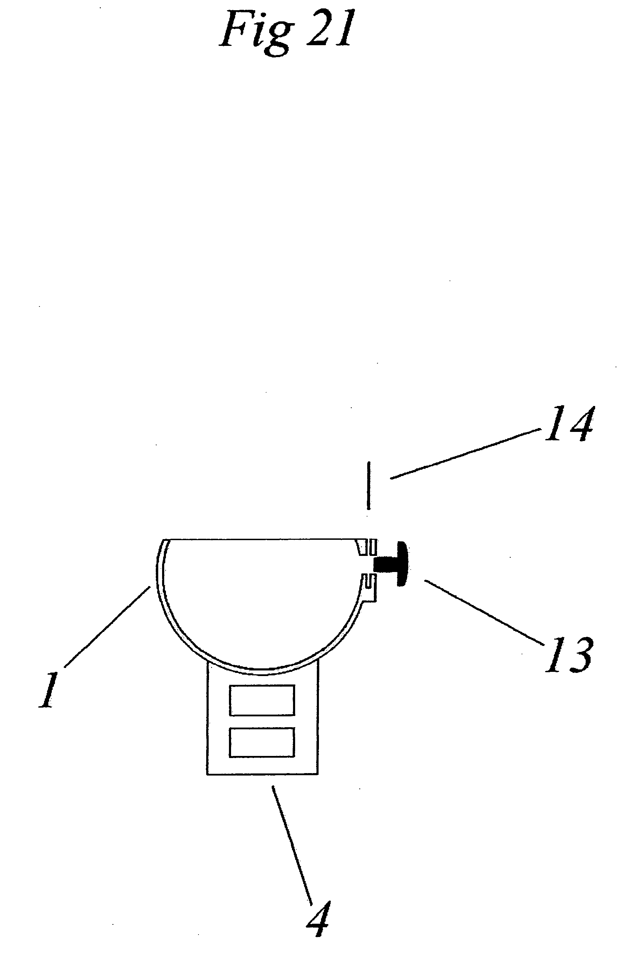

Figure 21 shows a different design of how the adjustable mechanism could be made with a threaded knob entering a threaded washer (exploded view).

Figure 22 shows the adjustable threaded knob mechanism assembled.

### Detailed Description of the Ball Thrower

The present invention proposes a lightweight and small pocket sized ball throwing device that can easily be attached or incorporated into any standard/textile/leather or retractable dog lead or purpose made length of strap. The ball throwing device can be attached to a dog leash or length of strap using the purposely designed handle. The strap/dog lead attachment means is mounted on the outside of the cup opposite to the open mouth of the cup, preferably centrally. With the ball throwing device securely attached to a dog leash, the clasp end of the dog leash can then be connected to a supplied retaining ring located on the leash handle. The ball throwing device can be used for picking a ball up hands-free. This is achieved by placing the ball throwing device over a ball and pressing down firmly and is enabled in that the substantially semi-spherical ball housing is slightly over-sized so that the widest dimension of the housing (i.e. the diameter) is greater than the widest dimension of the cup lip. The ball throwing device fits neatly over the ball and is able to hold the ball securely. The ball throwing device could have an adjustable mechanism for the purpose of controlling the distances that a ball can be thrown. This can be achieved by rotating an adjuster knob, which is located on the outside edge of the housing cup hemisphere. The adjuster knob, which when rotated, causes a tapered plate located on the inside of the housing cup to revolve which in turn can be used to decrease the overall size of the housing cup's inner casing hemisphere. With the ball throwing device attached or incorporated into a dog lead or strap, the lead/strap can be swung in a forward/over arm throwing motion, enabling the ball to be projected.

The projection of a ball is achieved by the ball releasing from the housing cup through the use of centrifugal force. The distance a ball can be thrown depends on which position the adjuster mechanism plate is set. With the adjuster knob rotated so that the tapered inner plate is recessed and in the downward position, the plate falls behind the line of the inner casing hemisphere. The adjuster, whilst in the downward position, causes no interference with the ball held within the housing cup and enables the ball to release and exit from the ball throwing device with less force and effort which is applied through the over arm swinging action of the leash or strap. With the adjuster mechanism plate in the upward position, the tapered inner plate falls to the outside line of the housing cup's inner casing hemisphere. The adjuster whilst in this upward position reduces the overall size of the inner casing hemisphere which in turn, interferes and tightens the ball against the housing cup's inner casing. This ensures the ball within the housing cup is held more securely. The upward position requires the user to apply more force to the over arm throwing action to enable the ball to release and exit from the ball throwing device with greater momentum which in turn results in the ball travelling further. The user is therefore able to throw a ball further whilst exerting less effort in using the ball throwing device and utilising leverage from the dog lead or straps length. The ball throwing device is designed so that it can be held on the dog leash whilst not in use, with or without the ball inserted. This feature enables the user to avoid having to place the dirty, messy ball in their pocket or bag.

The ball throwing device may be designed to hold a specific sized ball such as a tennis ball. Its unique design and structure is therefore unable to throw anything other than a ball. This safety feature should prevent dangerous projectile objects such as sticks or stones etc. from being thrown from the ball throwing device.

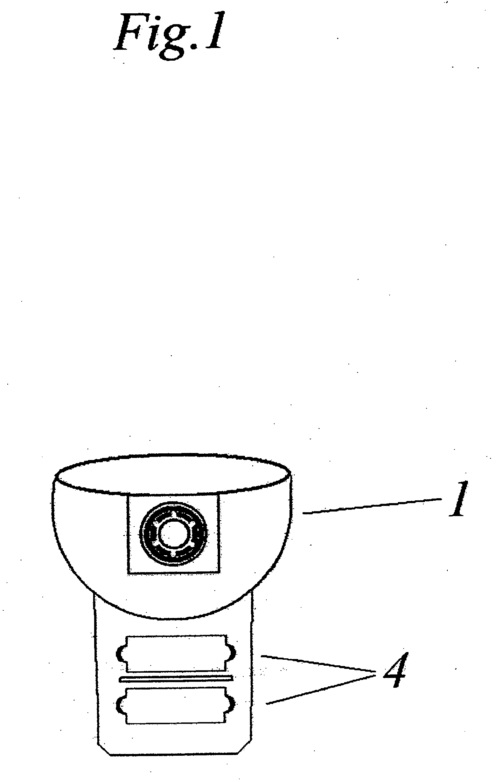

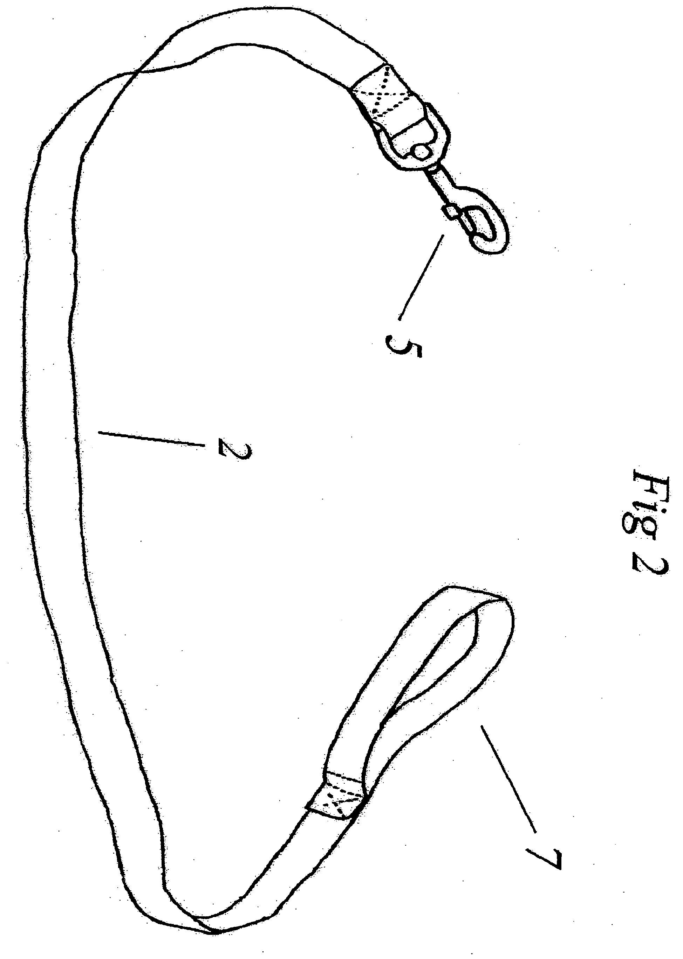

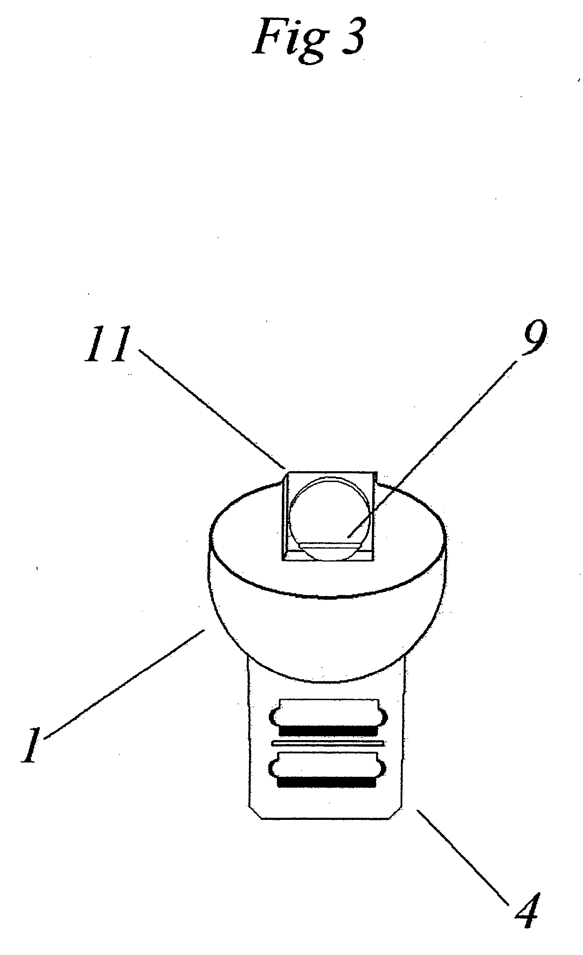

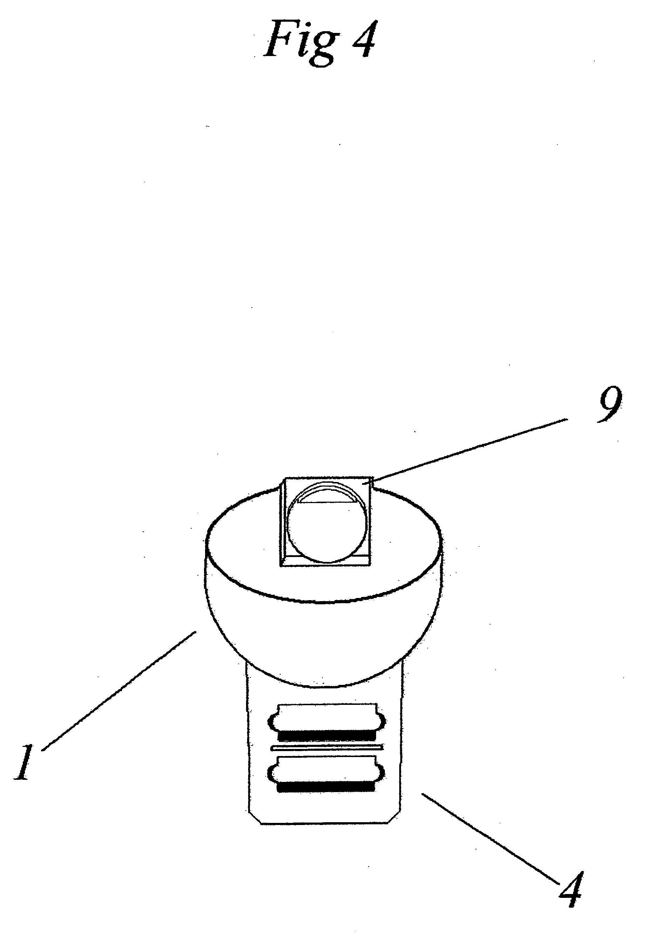

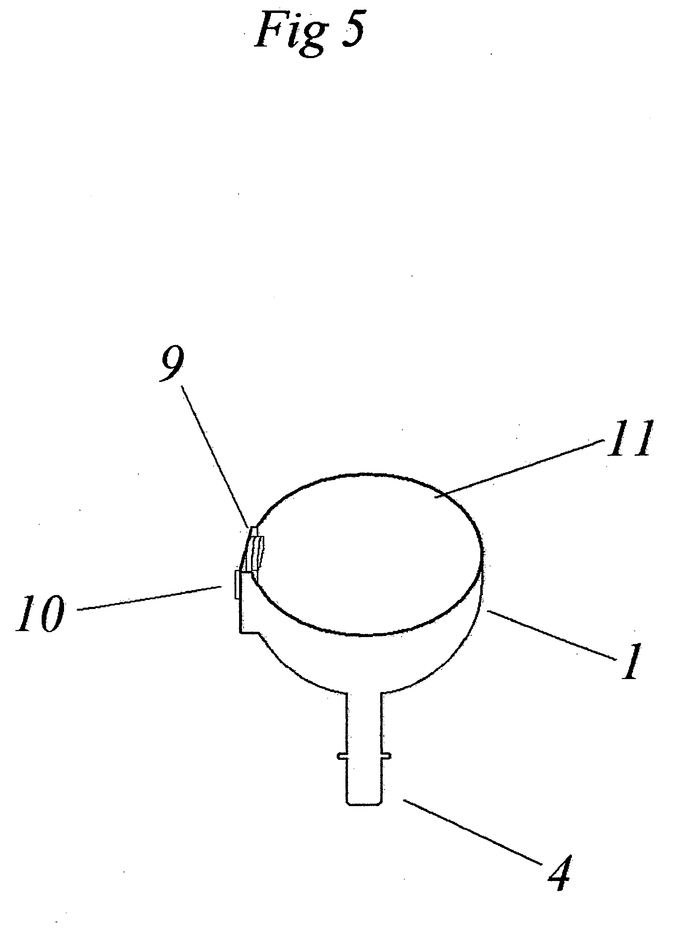

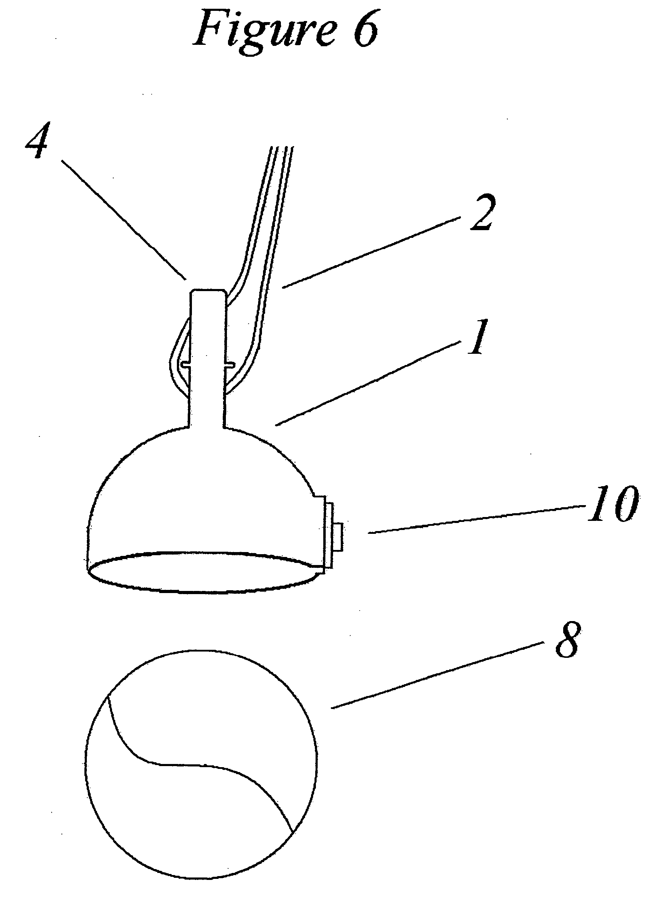

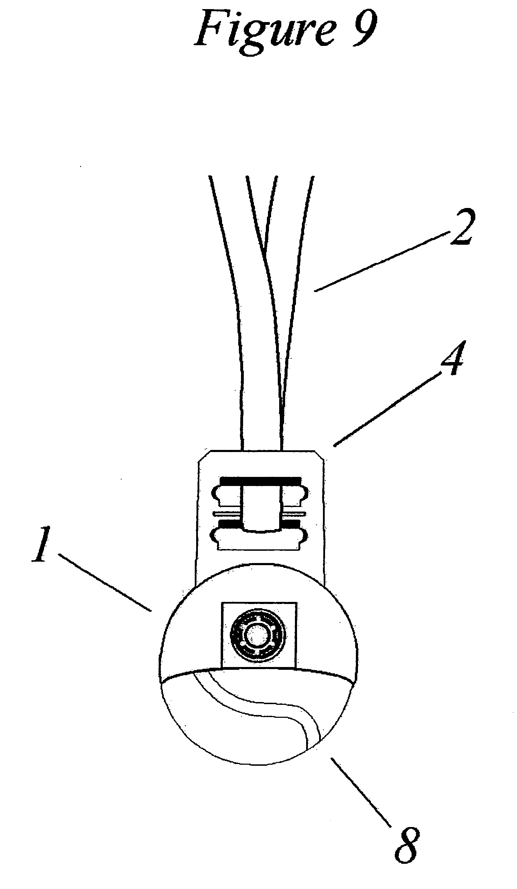

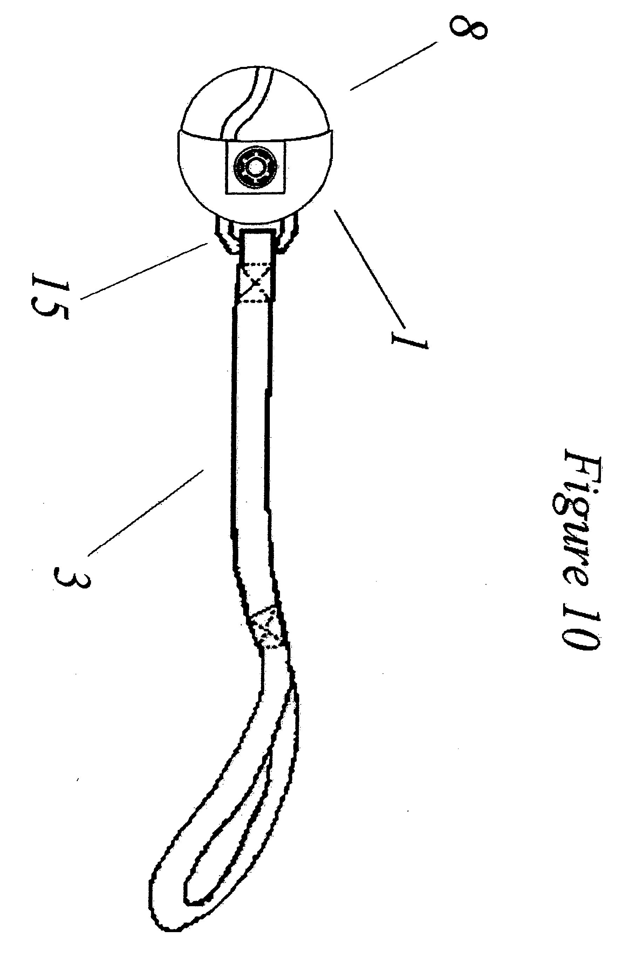

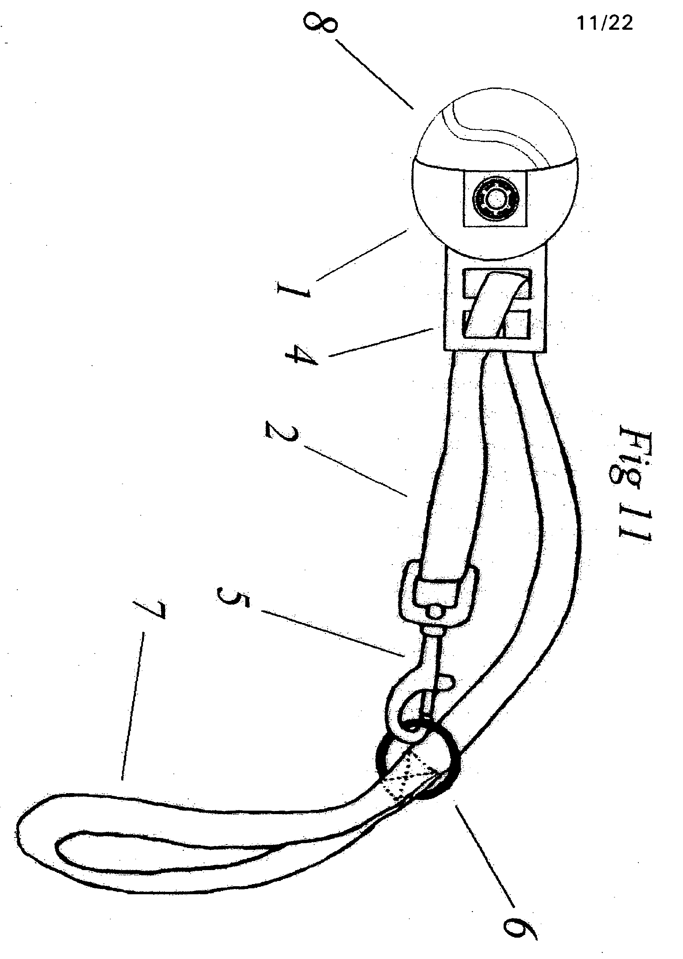

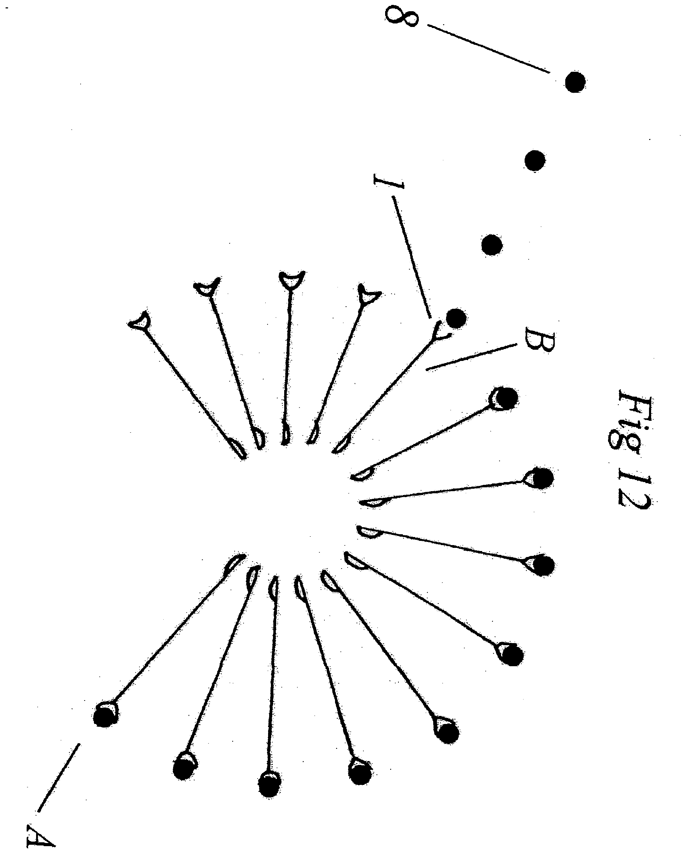

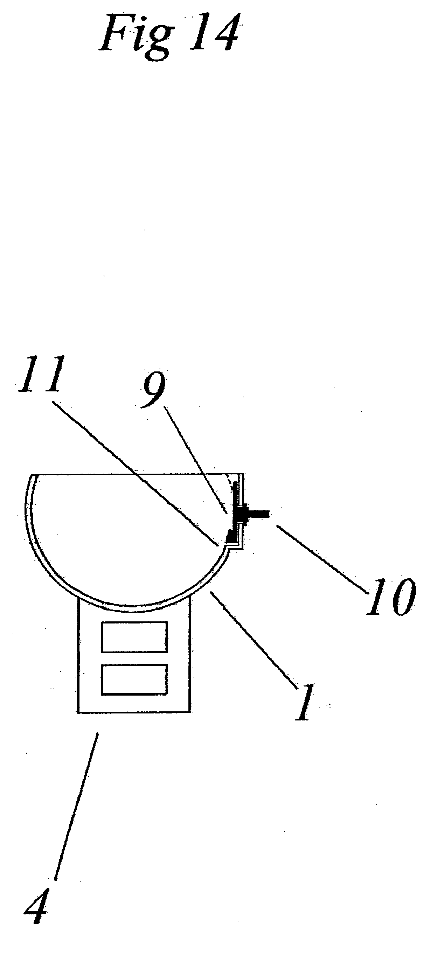

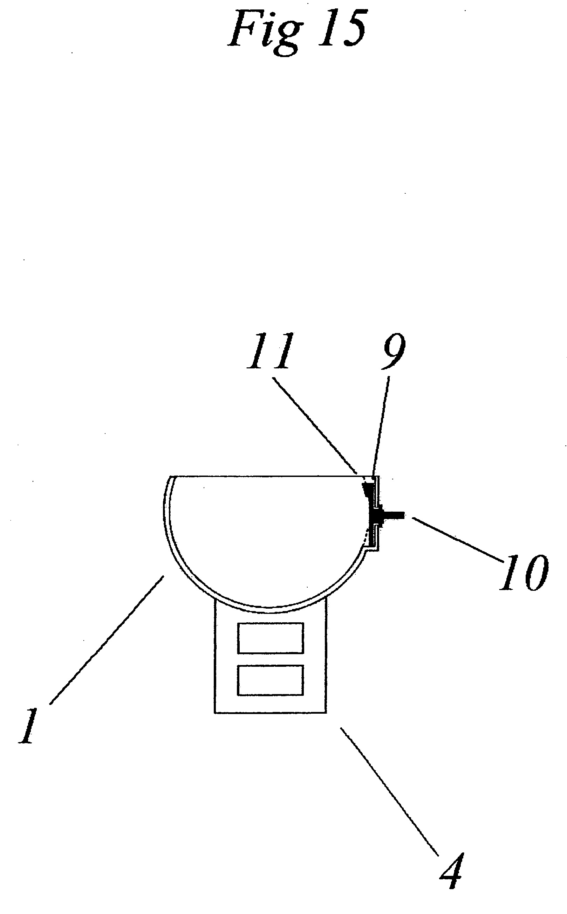

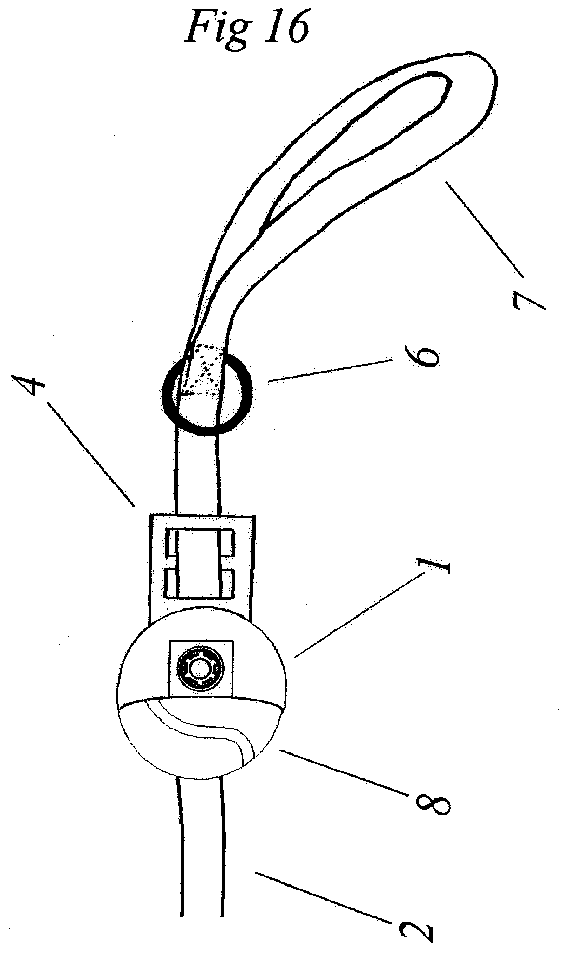

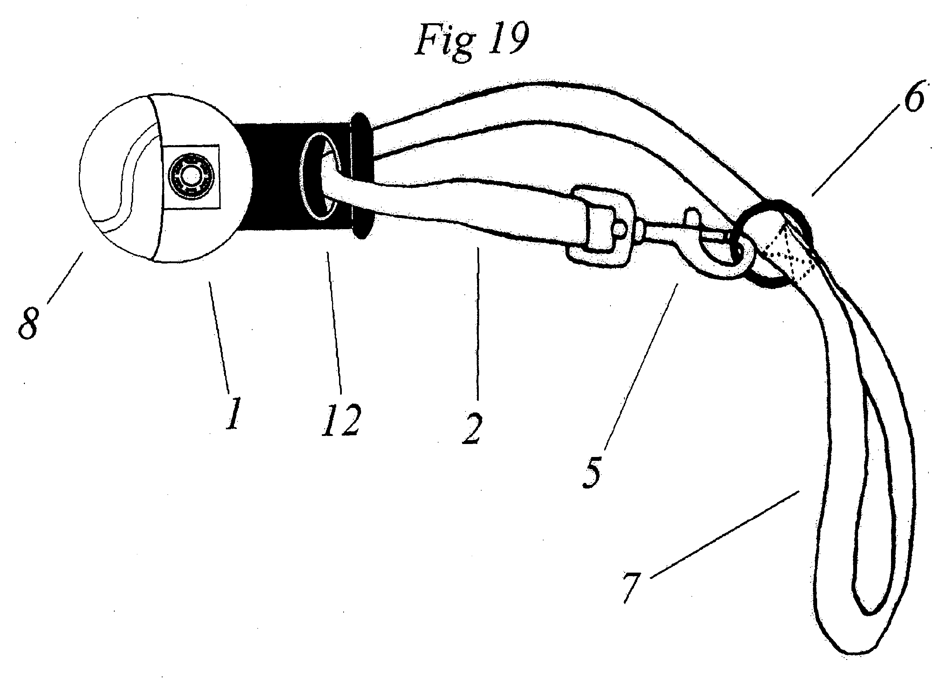

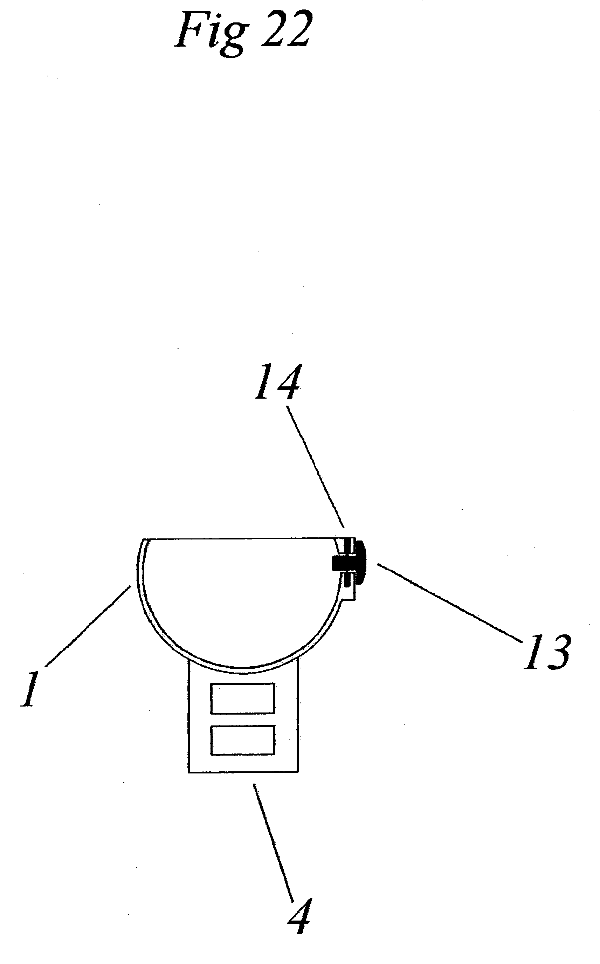

The ball throwing device (1) (Fig 1) can be attached to a dog leash (2) (Fig 2) or purposely made length of strap (3) (Fig 10) using the purposely designed handle on the ball throwing device (4) (Fig 1) or loop (15) (Fig 10) or cord lock handle (12) (Fig 19). With the ball throwing device (1) (Fig 11) securely attached to a dog leash (2), the clasp end of the dog leash (5) can then be connected to a supplied retaining ring (6) located on the leash handle (7). The ball throwing device can be used for picking up a ball (8) (Fig 6) hands free. This is achieved by placing the ball throwing device (1) over a ball (8) (Fig 9) and pressing down firmly. The ball throwing device (1) fits neatly over the ball (8) and is able to hold the ball securely. The ball throwing device (1) (Fig 5) could have an adjustable mechanism (9) or (Fig 22) threaded knob (13) entering a threaded washer (14) for the purpose of controlling the distance that a ball (8) can be thrown. This can be achieved by rotating an adjuster knob (10) (Fig 5) or (13) (Fig 22), which is located on the outside edge of the housing cup hemisphere. The adjuster knob (10) (Fig 5), which when rotated, causes a tapered inner plate (9) (Fig 3) located on the inside of the housing cup (11) to revolve (Fig 4) and can be used to decrease the overall size of the housing cup's (1) (Fig 5) inner casing hemisphere (11). The threaded knob (13) (Fig 22) can also be used to decrease the overall size of the inner casing hemisphere (11) by rotating the threaded knob (13) inward. With the ball throwing device (1) (Fig 12) attached or incorporated into a dog lead (2) (Fig 11) or strap (3) Fig 10), the lead/strap can be swung in a forward/over arm throwing motion (Fig 12), allowing the ball (8) to be projected. The projection of a ball is achieved by the ball releasing from the housing cup (1) through the use of centrifugal force. The distance a ball (8) can be thrown depends on which position the adjuster mechanism plate (9) (Fig 14) is set. With the adjuster knob (10) rotated so that the tapered inner plate (9) (Fig 3) is recessed and in the downward position, the tapered plate (9) falls behind the line of the inner casing hemisphere (11) (Fig 14). The adjuster, whilst in the downward position, causes no interference with the ball (8) held within the housing cup (1) and enables the ball (8) to release and exit from the ball throwing device (1) with less force and momentum that is applied through the over arm swinging action of the leash (2) or strap (3) (Fig 12). With the adjuster mechanism (9) (Fig 4) in the upward position, the tapered inner plate (9) (Fig 15) falls to the outside line of the housing cup's inner casing hemisphere (11). The tapered plate (9) (Fig 5) whilst in this upward position, reduces the overall size of the inner casing hemisphere (11) which in turn, interferes and tightens the ball (8) (Fig 9) against the housing cup's inner casing hemisphere (11) therefore holding the ball (8) inside the housing cup (1) more securely. The upward position of the tapered plate (9) (Fig 5) also requires the user to apply more force to the over arm throwing action (Fig 12) to enable the ball (8) to release and exit from the ball throwing device (1) with greater force and momentum, which in turn results in the ball (8) travelling further. The ball throwing device (1) (Fig 6) is designed so that it can be held on the dog leash (2) whilst not in use, with or without the ball (8) inserted (Fig 16). This feature enables the user to avoid having to place the dirty, messy ball (8) in their pocket or bag.

The ball throwing device may be designed to hold a specific sized ball such as a tennis ball. Its unique design and structure is therefore unable to throw anything other than a ball. This safety feature should prevent dangerous projectile objects such as sticks or stones etc. from being thrown from the ball throwing device.

## Claims

1. A ball throwing device comprising a substantially semi-spherical ball housing cup and a strap/dog lead attachment means mounted on an outer surface of the ball housing cup such that, in use, with a strap/dog lead attached to the ball throwing device the device may be swung via the strap/dog lead enabling a ball placed in the ball housing cup to be projected.

2. A ball throwing device as claimed in claim 1 wherein the ball housing cup is dimensioned for the purpose of holding a specific sized ball.

3. A ball throwing device as claimed in claim 1 wherein the strap/dog lead attachment means comprises a handle having an opening for attachment of a strap/dog lead, a handle having an opening for attachment of a strap/dog lead and including a spring biased lock to close the opening, or a loop for attachment of the strap/dog lead.

4. A ball throwing device as claimed in claim 1 wherein the ball housing cup can be vertically placed over a ball enabling a ball to be picked up by ball throwing device.

5. A ball throwing device as claimed in claim 1 wherein the ball housing cup includes an adjuster mounted on and passing through a wall of the ball housing cup, the adjuster being adapted to be projectable into the inner space of the ball housing cup in order to accommodate differently sized balls and/or to control the distance a ball can be thrown.

6. A ball throwing device as claimed in claim 5 wherein the adjuster includes a tapered plate mounted to the inside of the ball housing cup and connected to an adjustment knob on the outside of the ball housing cup, such that turning of the knob rotates the tapered plate to increase or decrease the amount the plate protrudes into the ball housing cup.

7. A ball throwing device as claimed in claim 5 wherein the adjuster includes a threaded bolt passing through the wall of the ball housing cup and having an adjustment knob attached thereto on the outside of the ball housing cup, such that turning of the knob rotates the threaded bolt to increase or decrease the amount the bolt protrudes into the ball housing cup.

8. A ball throwing device as claimed in claims 6 or 7 wherein the adjuster can penetrate the ball housing cup to an extent that pressure can be applied to a ball held within the housing cup such that the adjuster interferes and restricts the ball's release from the ball throwing device such that the user is required to apply more force to the throwing motion resulting in the ball being projected from the device with greater momentum.

9. A ball throwing device as claimed in claim 1 wherein the device, when not in use, with or without a ball inserted, may be supported on a dog lead via said attachment means.
